# EUROPEAN PATENT APPLICATION

(11) **EP 4 670 501 A1**
(43) Date of publication of application: **31.12.2025**
(21) Application number: 25185314.9
(22) Date of filing: 25.06.2025
(51) Int. Cl.: A01M 7/00, B01F 35/21, A01B 79/00, B05B 15/20

(54) **CONTROLLED RECIRCULATION OF AN AGRICULTURAL PRODUCT ON A TENDER VEHICLE**

(30) Priority: 28.06.2024 US 202418758447
(71) Applicant: Raven Industries, Inc., Sioux Falls, South Dakota 57117-5107 (US)
(72) Inventor: KOCER, Jared Ernest, Sioux Falls, South Dakota, 57110 (US); MICHAEL, Nicholas O., Sioux Falls, South Dakota, 57108 (US)
(74) Representative: Pfenning, Meinig & Partner mbB

(57) **Abstract**

A controlled recirculation system and method for a tender vehicle to ensure thorough mixing of an agricultural product for application by an agricultural sprayer onto an agricultural field. The controlled recirculation system is contained on the tender vehicle. While the tender vehicle is in transit to fill the agricultural sprayer in the field, the controlled recirculation system recirculates the agricultural product through recirculation plumbing before delivery to the sprayer. The system and method include a feedback loop that dictates when recirculation of the agricultural product is needed. If recirculation is needed, then a carrier pump moves the agricultural product out of the primary carrier tank, through recirculation plumbing, and subsequently returns the mixture to the primary carrier tank. This automated process encourages thorough mixing and homogeneity of the agricultural product before transfer to the agricultural sprayer.

## Description

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright Raven Industries, Inc. of Sioux Falls, South Dakota. All Rights Reserved.

### TECHNICAL FIELD

This document pertains generally, but not by way of limitation, to controlled recirculation of an agricultural product within plumbing on a tender vehicle.

### BACKGROUND

An agricultural sprayer is a device that applies agricultural products to agricultural fields. These agricultural products include, for example, liquid fertilizer, fungicides, pesticides, defoliants, water, and herbicides. Sometimes, agricultural sprayers include one or more autonomous functions that permit control of the application of agricultural products. Autonomous spraying can facilitate the application of product according to prescriptions, field map specifications, or the like. A tender vehicle is a mobile rig that serves as a supply point to provide additional agricultural product to the agricultural sprayer.

### OVERVIEW

The efficacy of spraying operations by an agricultural sprayer depends in part on the appropriate concentration and uniform application of the agricultural product across the field. Agricultural sprayers are limited by the capacity of their sprayer tanks, necessitating frequent filling during operations, especially in the case of larger fields. In some cases, filling is accomplished by transferring additional agricultural product from a tender vehicle to the agricultural sprayer in the field.

The term "filling" or "fill" does not imply that the transfer of the agricultural product from the tender vehicle to the agricultural sprayer will result in a completely full supply tank of the agricultural sprayer. Instead, "filling" or "fill" is used to mean the transfer of the agricultural product from one or more vehicles or storage containers to another one or more vehicles or storage containers, without regard for an amount or certain quantity of agricultural product.

A significant challenge arises during the filling process. When an agricultural additive is pre-mixed with a carrier fluid, such as water, to create the agricultural product, and then the agricultural product is placed in a tender tank of the tender vehicle, the components of the agricultural product may undergo separation or settling. Despite attempts to mitigate this issue through mechanical agitation mechanisms in some tender vehicles, the mixing process is often incomplete and may result in non-uniform concentration gradients within the agricultural product.

Consequently, when the inadequately mixed agricultural product is transferred to the agricultural sprayer and applied across the field, certain areas may receive a higher concentration of product than intended. This imbalance not only compromises the effectiveness of the product application but also poses risks of crop damage due to overexposure.

Existing methods lack a reliable means of assessing the thoroughness and homogeneity of the mixing process within the tender tank before transferring the agricultural product to the agricultural sprayer. As a result, the agricultural industry faces persistent challenges in achieving precise and uniform product application without adverse effects on crop health and productivity.

The controlled recirculation tender vehicle systems and methods described herein conduct thorough mixing of an agricultural additive with the carrier fluid prior to delivery to an agricultural sprayer through recirculation in contrast to mechanical agitation conducted in reservoirs. These example systems include a tender vehicle equipped with a recirculation system and a controller to oversee the recirculation process. Unlike traditional mechanical agitation systems (e.g., with mechanical agitators in reservoirs), the example systems and methods described herein include a feedback loop that directs the recirculation of the agricultural product through the plumbing of the tender vehicle tank as specified, for instance based on a measurement of separation, such as settling, viscosity or the like. These example systems and methods achieve thorough mixing and homogeneity of the agricultural product before transfer to the agricultural sprayer. The thorough mixing and homogeneity provided with the systems and methods enhance operational performance including, but not limited to, ensuring agricultural products are sprayed with a consistent concentration.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a perspective view of an example agricultural sprayer.
FIG. 2 is a perspective view of an example controlled recirculation system located on a tender vehicle.
FIG. 3 is a detailed schematic view of example of components of the controlled recirculation system shown in FIG. 2.
FIG. 4 is a schematic view illustrating an example of operation of the controlled recirculation system shown in FIG. 3 in a recirculation configuration.
FIG. 5 is a schematic view illustrating an example of an additive recirculation configuration.
FIG. 6 is a schematic view illustrating an example of an additive injection configuration.
FIG. 7 is a schematic view illustrating an example of a post-injection recirculation configuration.
FIG. 8 is a schematic view illustrating an example discharge operation configuration that may be performed prior to a tank cleaning process.
FIG. 9 is a schematic view illustrating example cleaning agent configurations that may be performed during the tank cleaning process.
FIG. 10 is a schematic diagram of an example controller of the controlled recirculation system shown in FIG. 3.

### DETAILED DESCRIPTION

The following description of examples of the invention is not intended to limit the invention to these examples, but rather to enable any person skilled in the art to make and use this invention.

### General Overview

Disclosed herein are examples of controlled recirculation tender vehicle systems and methods that conduct thorough mixing of an agricultural product prior to delivery to an agricultural sprayer. Some examples of the systems include a tender vehicle equipped with a controlled recirculation system and a controller to oversee the recirculation process. Unlike traditional mechanical agitation systems, some example systems and methods include a feedback loop that determines if recirculation of the agricultural product is needed, for instance through plumbing of the system. These example systems and methods seek to achieve thorough mixing of the agricultural product before transfer to the agricultural sprayer.

Some examples of the method include receiving a notification for filling the agricultural sprayer with the agricultural product. The notification prompts the controller to initiate premixing of a powdered or liquid agricultural additive and a carrier fluid, such as water, and storing the resultant agricultural product in a tank. In some examples, the tank is a primary carrier tank located on the tender vehicle. Some examples of the tender vehicle transport the agricultural product to the agricultural sprayer in the agricultural field, potentially while mixing the agricultural product. In some examples, the tender vehicle delivers additional agricultural product to the agricultural sprayer while the agricultural sprayer is in the process of spraying the agricultural field and thereby permits continuous operation of the agricultural sprayer.

While the tender vehicle is delivering the agricultural product to the agricultural sprayer (e.g., transporting, filling or the like), examples of the controller on the tender vehicle evaluates additional mixing of the agricultural product and conducts recirculation if specified. If recirculation is specified, then a carrier pump moves the agricultural product out of the primary carrier tank, through recirculation plumbing, and subsequently returns the agricultural product to the primary carrier tank. Recirculation through the plumbing turbulates the agricultural product within the plumbing and accordingly ensures additives are mixed with the agricultural product while decreasing dead zones otherwise present with mechanical agitation (e.g., along corners of a tank, remote from agitators or the like). This automated process decreases settling and ensures thorough mixing of the agricultural product. Moreover, the recirculation is particularly beneficial when using a powdered agricultural additive as recirculation with the systems described herein facilitates enhanced dissolution of otherwise undissolved powder.

Example systems and methods offer one or more recirculation methods, including, but not limited to, schedule-based or sensor-based methods. Some examples of the schedule-based methods include features such as a user interface for specifying a schedule. The user interface may be any of a variety of different types for accepting various operator inputs, monitoring of the chemical treatment mixture, and creating, setting, and monitoring automatic recirculation schedules. Some examples of the sensor-based methods include sensors that provide data related to characteristics of a homogeneity of the agricultural product.

In some situations, the agricultural product may be denser than water. In these cases, the examples of the systems and methods may include one or more sensors at or near the bottom of the tank that determine characteristics of the agricultural product, such as homogeneity. There are various characteristics or indicators of homogeneity, including, but not limited to, translucency, viscosity, color, particulate counts or the like. Moreover, the homogeneity may be measured using spectroscopy including using infrared light (IR spectroscopy), near-infrared light (NIR spectroscopy), or light emitting diode (LED) reflection.

For example, translucent water at the bottom of the tank is indicative agricultural additive has settled out from the carrier fluid (such as water). Conversely, in situations having an agricultural product less dense than water example systems and methods include one or more floating sensors (or sensors proximate the top of the tank) that determine characteristics of the agricultural product. In these examples, translucent water near the free surface of the agricultural product indicative of separating of the agricultural additive from the carrier fluid.

Some example systems and methods include at least one sensor one at the bottom and at least one sensor at the top of one or more of the tanks. These example systems and methods compare the results of the bottom sensor to the results of the top sensor to make sure that the product in each tank was agitated enough. Other example systems and methods compare the results obtained from the bottom and top tank sensors to the water tank sensor results. If it is known that there is clean water in the water tank, then it would follow that everything else has clean water.

### Description

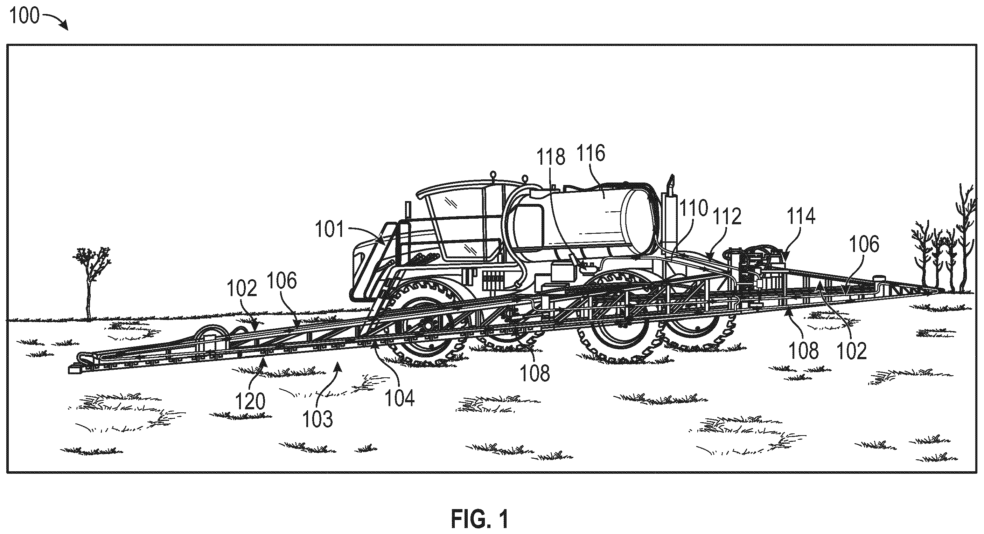

FIG. 1 is a perspective view of an example agricultural sprayer 100 for agricultural purposes. In the example shown in FIG. 1, the agricultural sprayer 100 includes a chassis 101 that carries a supply tank 116 of an agricultural product including a carrier fluid (like a solvent, such as water) and a mixed agricultural additive, which may be either powdered or liquid. The agricultural product includes, but is not limited to, fertilizers, herbicides, pesticides, fungicides, defoliants, and the like.

The agricultural sprayer 100 includes a spraying system 103 extending from the supply tank 116 to one or more product dispensers 120 along sprayer booms 102. The sprayer booms 102 extend from the chassis 101 and include respective sprayer boom tubes 104. In some examples, the supply tank 116 includes a main line 110 and a system pump 118 along the main line 110. The main line 110 is in communication with the sprayer boom tubes 104. Operation of the system pump 118 delivers the agricultural product to the sprayer boom tubes 104 for delivery through the one or more product dispensers 120. The product dispensers 120 include, but are not limited to, one or more nozzles, arrays of nozzles, boom sections or the like.

As further shown in FIG. 1, the sprayer boom tubes 104 include proximal portions 106 and distal portions 108. For example, the proximal portions 106 extend along the sprayer booms 102 toward the respective ends of the booms 102 remote from the chassis 101. The distal portions 108 of the sprayer boom tubes 104 extend from the ends of the booms 102 toward the chassis 101. In this example, the product dispensers 120 are provided along the distal portions 108.

In some examples, during spraying operations a control valve 114 (such as a three-way control valve, or the like) are interposed between the main line 110 and the sprayer boom tubes 104. Moreover, in some examples, a return line is configured to deliver the pumped agricultural product from the supply tank 116 to at least one of the sprayer boom tubes 104 (such as the proximal portion 106 of the right sprayer boom tube 104). In the view shown in FIG. 1, the main line 110 is also in communication with the left sprayer boom tube 104. The agricultural product is delivered from the supply tank 116 by the system pump 118 and to each of the sprayer boom tubes 104 by way of the main line 110 and, in this example, the control valve 114. The proximal portions 106 of the sprayer boom tubes 104 deliver the agricultural product to the ends of the sprayer booms 102, and the agricultural product returns along the distal portions 108 of the sprayer boom tubes 104 for dispensing in the one or more product dispensers 120.

In some examples, the circulation of fluids other than the agricultural product through the spraying system 103 is specified. For instance, in some examples cleaning agents are circulated through the spraying system 103 to remove residue of a first agricultural product and prepare the spraying system 103 for a second agricultural product. **A set forth in detail below,** where cleaning is specified the spraying system 103 is reconfigured relative to the spraying operation.

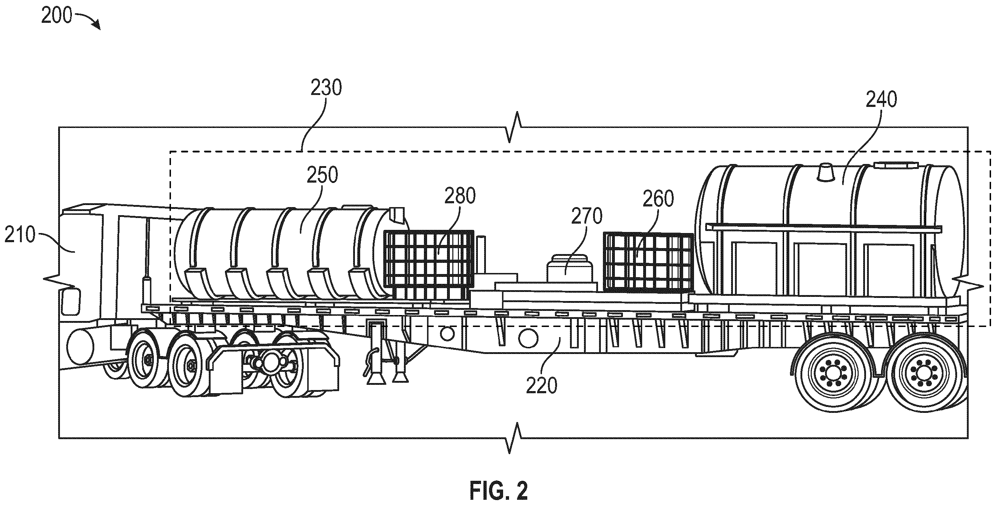

FIG. 2 is a perspective view of an example tender vehicle 200. In the example shown in FIG. 2, the tender vehicle 200 includes a semi-trailer truck that includes a cab 210 (or tractor) portion and a trailer 220 portion. In some examples, a controlled recirculation system 230 is housed on the trailer 220.

Examples of the controlled recirculation system 230 include several parts and features for conducting thorough mixing (e.g., with homogeneity) of an agricultural product before delivery to the agricultural sprayer 100. The system 230 includes in this example a primary carrier tank 240 that stores the agricultural product that is delivered to the agricultural sprayer 100. Some examples of the controlled recirculation system 230 also include one or more of a water tank 250 or cleaning agent tank 260. A chemical tank 270 (e.g., an additive tank or similar) is included in another example and contains one or more powdered or liquid chemical additives that are injected into the primary carrier tank 240 and mixed with the agricultural product therein. In some examples, the tender vehicle 200 supplies this new agricultural product containing the one or more chemical additives to the agricultural sprayer 100 where the new agricultural product mixes with the existing agricultural product in the supply tank 116. Some examples of the controlled recirculation system 230 also include a rinsate tank 280 for storing the rinse water from cleaning processes, for instance recovered from an agricultural sprayer.

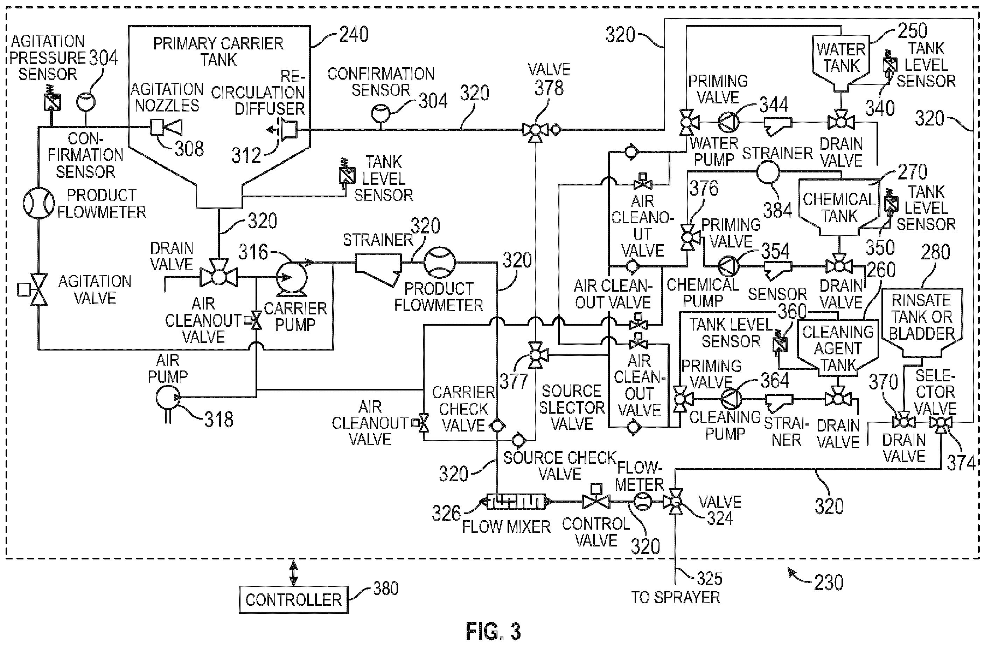

FIG. 3 is a detailed schematic view of components of the controlled recirculation system 230 shown in FIG. 2. Some examples of the controlled recirculation system include the primary carrier tank 240 for storing the agricultural product. The agricultural product is a solution of one or more agricultural additives (either powdered or liquid) mixed with a carrier fluid. In some examples, the carrier fluid is water.

In the examples shown in FIG. 3, sensors 304 monitor characteristics representative of separation between the agricultural additive and the carrier fluid, such as viscosity and homogeneity of the agricultural product in the primary carrier tank 240. Any one or more of a variety of sensor 304 are included for monitoring including, but not limited to, infrared, camera, and LED sensors or the like. The various sensors facilitate the monitoring of associated characteristics representing chemical and fluid properties of the agricultural product. for example, the sensors 304 detect separation between the agricultural additive and the carrier fluid. As discussed herein, monitoring by the sensors 304 prompts recirculation according to one or more mechanisms, such as specified thresholds.

In the example shown in FIG. 3, when the agricultural product is denser than water, the sensors 304 are optionally located proximate the bottom of the primary carrier tank 240. These sensors 304 determine characteristics of the agricultural product representative of separation, homogeneity or the like. In general, translucent water at the bottom of the tank is indicative settling of the agricultural additive out of the carrier fluid. Conversely, in examples having an agricultural product less dense than water, the sensors 304 include one or more of floating sensors or sensors located proximate the top of the tank that monitor agricultural product characteristics representative of separation, homogeneity or the like of the agricultural product. In this example, translucent water near the free surface of the agricultural product is indicative the agricultural additive has separated from the carrier fluid. As noted above, some example systems and methods include at least one sensor one at the bottom and at least one sensor at the top of one or more of the tanks. These example systems and methods compare the results of the bottom sensor to the results of the top sensor to make sure that the product in each tank was agitated enough.

The primary carrier tank 240, in some examples, may also include agitation nozzles 308 that are used to agitate the agricultural product within the tank. A recirculation diffuser 312 optionally diffuses the incoming recirculated agricultural product as it enters the primary carrier tank 240 to assist with mixing in the tank. A carrier pump 316 directs the agricultural product from the primary carrier tank 240 and recirculates it through recirculation plumbing 320. The recirculation plumbing includes various lengths and configurations of plumbing, and FIG. 3 is merely one example. The recirculation plumbing 320 also includes a valve 324 that selectively directs the agricultural product through a sprayer port 325 to the connected agricultural sprayer 100 for filling.

Some example systems include an air pump 318. In some of these examples, the air pump 318 blows chemical or the agricultural product back into their respective tanks. In other examples, the air pump 318 is used to blow the lines clean that lead to the rinsate tank 280.

In some examples, the agricultural sprayer 100 is connected to the tender vehicle 200 at the sprayer port 325 and ready for transfer. When filling the agricultural sprayer 100, the valve 324 is actuated and directs the agricultural product into the supply tank 116 of the agricultural sprayer 100 for filling (see FIG. 1). Otherwise, the valve 324 may be positioned to continue the recirculation operation, as discussed below.

In some examples, the controlled recirculation system 230 includes a static mixer 326. In some of these examples, the static mixer 326 includes one or more fins, passages or the like, that turbulate the agricultural product and accordingly assist with mixing.

The water tank 250 in some examples includes a tank level sensor 340 for measuring a water level in the water tank 250. A water pump 344 directs the water from the water tank 250. A chemical tank 270 is shown in the example of Figure 3. The chemical tank 270 optionally includes a tank level sensor 350 for measuring the chemical level in the chemical tank 270. A chemical pump 354 directs chemical in the chemical tank 270 for mixing, for instance with water, a base agricultural product or the like. In some examples, the chemical pump 270 injects the chemical (additive) into the recirculating agricultural product, water or the like.

The example of FIG. 3 further includes a cleaning agent tank 260 that stores a cleaning agent for cleaning of one or more of the controlled recirculation system 230, agricultural sprayer plumbing, or both. The cleaning agent is pumped from the cleaning agent tank 260 with a cleaning pump 364. A rinsate tank 280 is optionally included with the controlled recirculation system 230. The rinsate tank 280 stores rinse water (e.g., water, remnant agricultural product, cleaning agents or the like) collected from one or more of the tanks, such as the primary carrier tank 240, the water tank 250, the chemical tank 270 and the associated plumbing. The plumbing includes one or more of a drain valve 370 or a selector valve 374. Other components shown in the FIG. 3 example include a priming valve 376, a source selector valve 377 (e.g., a three-way valve), and a valve 378, such as a three-way valve, that is part of the recirculation plumbing 320.

Some examples of the controlled recirculation system 230 also include a controller 380. As described herein, the controller 380 is in communication with one or more components of the controlled recirculation system 230 including, but not limited to, the sensors 304 and the carrier pump 316. The operation of the controller 380 is explained in detail below.

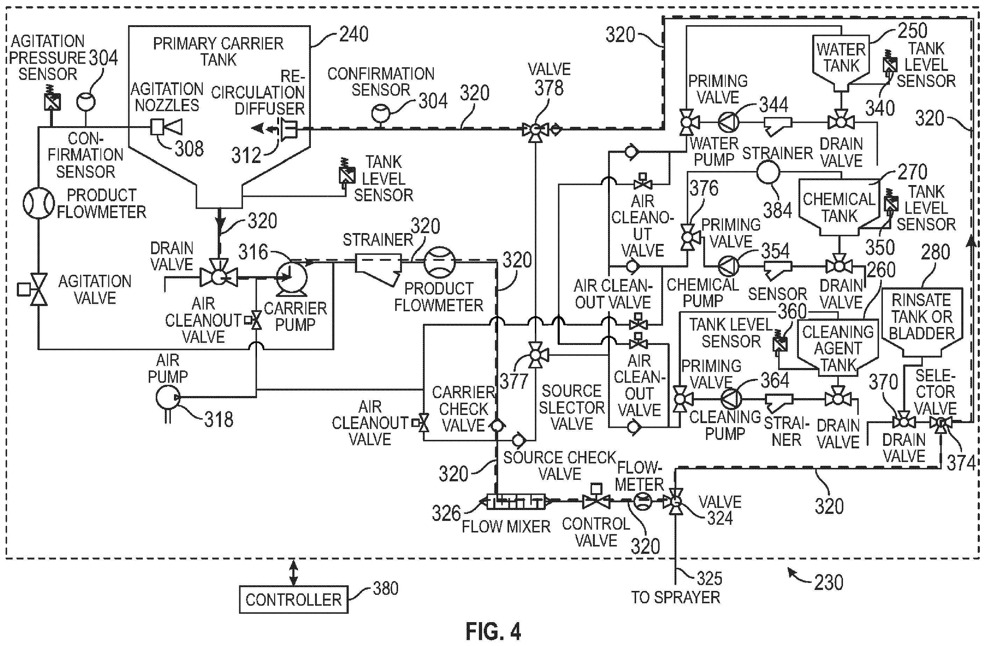

FIG. 4 is a schematic view illustrating an example recirculation configuration operation of the controlled recirculation system 230 shown in FIG. 3. In this example, the controlled recirculation system 230 recirculates the agricultural product through the recirculation plumbing 320 to thoroughly mix the agricultural product, for instance to enhance homogeneity. By the time the agricultural product returns to the primary carrier tank 240 or is delivered to the agricultural sprayer 100 the agricultural product is thoroughly mixed and ready for consistent application by the agricultural sprayer.

Referring to FIG. 4, the recirculation process begins by having the carrier pump 316 deliver agricultural product from the primary carrier tank 240 into the plumbing. The agricultural product flows through the recirculation plumbing 320 to the valve 324, such as a three-way valve that permits redirection of flow from the sprayer port 325 to the remainder of the plumbing 320.

Continuing the recirculation process, the agricultural product flows through the recirculation plumbing 320 to the selector valve 374, such as a three-way valve. In the example recirculation configuration shown in FIG. 4 the agricultural product continues from the selector valve 374 through the recirculation plumbing 320, through the valve 378 and the sensors 304, and returns to the primary carrier tank 240. The agricultural product enters the primary carrier tank 240 through the optional recirculation diffuser 312.

In some examples, the recirculation process includes one or more (including multiple cycles) of the agricultural product from the primary carrier tank 240, through the recirculation plumbing 320, and back into the primary carrier tank 240. In other examples, the recirculation process is a single cycle. In some examples, the sensors 304 help conduct the recirculation process using automatic control. In some of these examples, the sensors 304 in combination with the controller 380 determine if the agricultural product is sufficiently mixed (e.g., by measurement of characteristics of the agricultural product, such as homogeneity) or if additional recirculation is beneficial, for instance if a threshold is not achieved.

If automatic control is not used, then the controlled recirculation system 230 in some examples determines at least one or more cycles of recirculation are completed. For example, if the primary carrier tank 240 contains 200 gallons of agricultural product (as measured using a level sensor in the primary carrier tank 240) and the carrier pump 316 can pump at 25 gallons per minute, then it will take 8 minutes for one recirculation cycle. Thus, if two recirculation cycles are desired, then the controlled recirculation system 230 will run for 16 minutes.

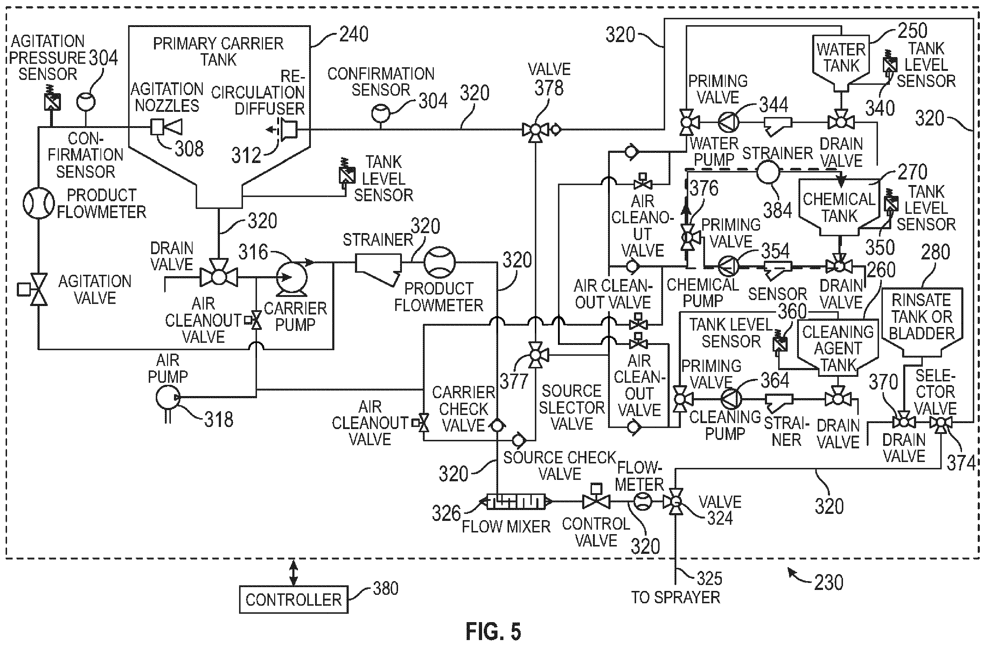

FIG. 5 illustrates an example of an additive recirculation configuration. The recirculation process shown in FIG. 4 in some examples is conducted simultaneously with the additive recirculation configuration shown in FIG. 5 to permit simultaneous injection of chemicals into the agricultural product. The additive recirculation configuration maintains homogeneity of the chemical in the chemical tank 270 mixed. In some examples, the chemical pump 354 recirculates the chemical in the chemical tank 270 around a loop by drawing the chemical from the chemical tank 270 in a clockwise manner through the priming valve 376 and back to the chemical tank 270. In the example shown in FIG. 5, the arrow shows that the additive recirculation is in a clockwise manner. In other examples, the additive recirculation may be in a counter-clockwise manner.

In some examples, one or more sensors 384 provide automatic control to the additive recirculation process. In some of these examples, the sensors 384 in combination with the controller 380 determine if the chemical in the chemical tank 270 is sufficiently mixed (e.g., by measurement of characteristics such as homogeneity) or if additional recirculation is beneficial, for instance if a threshold is not achieved.

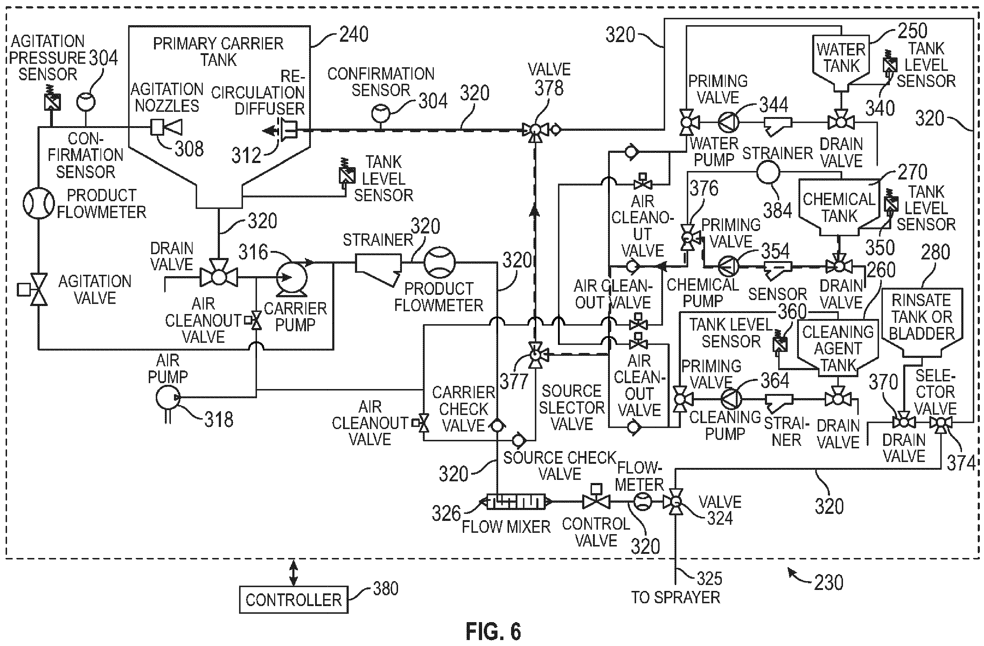

FIG. 6 illustrates an example of an additive injection configuration. Examples of the additive injection configuration take the additive (such as a chemical) from the chemical tank 270 and inject the chemical into the primary carrier tank 240. In some examples, the chemical pump 354 draws the chemical from the chemical tank 270, through the priming valve 376, and to the source selector valve 377. The source selector valve 377 is positioned such that the chemical flows to the valve 378. With the valve 378 positioned correctly, the chemical pump 354 continues pumping the chemical through the sensors 304, through the recirculation diffuser 312, and injects the chemical into the agricultural product stored in the primary carrier tank 240.The arrows show the direction of the flow of chemical from the chemical tank 270 to the injection into the primary carrier tank 240.

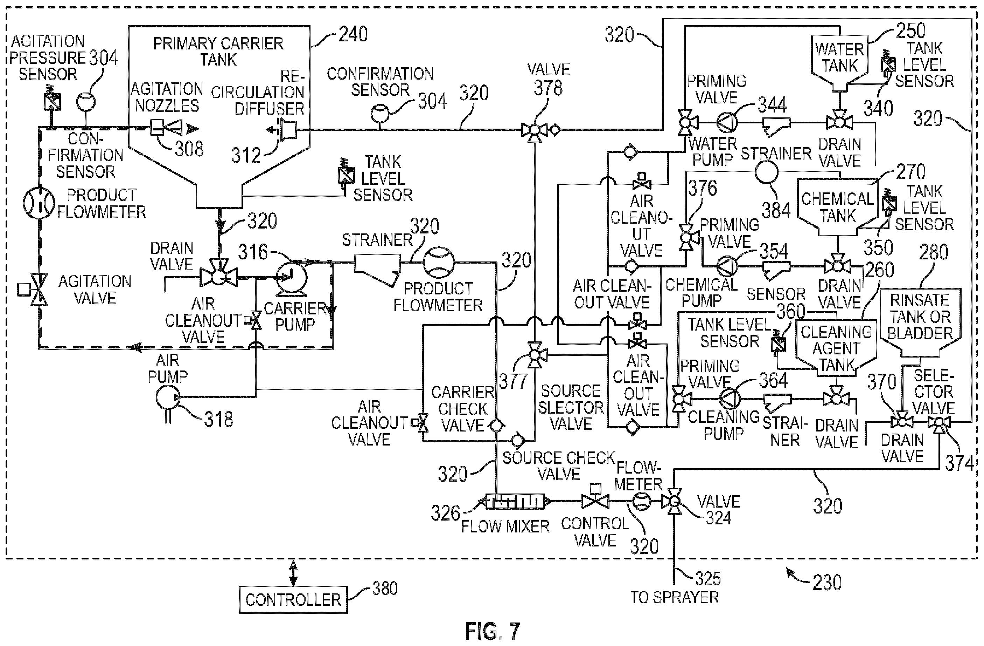

FIG. 7 illustrates an example of a post-injection recirculation configuration. The post-injection recirculation configuration recirculates (e.g., cycles, mixes, agitates or the like) the agricultural product, for instance after chemical has been injected into the primary carrier tank 240 (as shown in FIG. 6). In some examples of the post-injection recirculation configuration, the carrier pump 316 pumps the agricultural product (including the injected chemical and a carrier fluid or base agricultural product) from the primary carrier tank 240 and through the recirculation plumbing 320 as shown. In some examples, the post-injection recirculation configuration continues through the sensors 304, through the agitation nozzles 308, and back into the primary carrier tank 240. In the example shown in FIG. 7, the arrow shows that the post-injection recirculation configuration is in a clockwise manner. In other examples, the post-injection recirculation configuration may be in a counter-clockwise manner.

In some examples, the sensors 304 provide automatic control to the post-injection recirculation process. In some of these examples, the sensors 304 in combination with the controller 380 determine if the agricultural product is sufficiently mixed with the chemical or additive (e.g., by measurement of characteristics of the agricultural product, such as homogeneity) or if additional post-injection recirculation is beneficial, for instance if a threshold is not achieved.

### Tank Cleaning Process

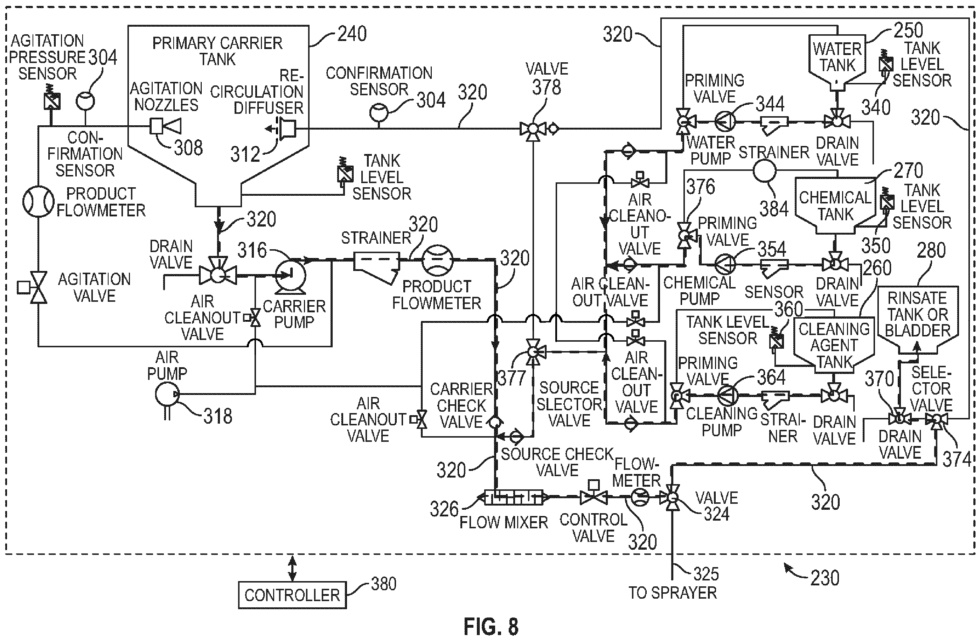

Figure 8 illustrates an example tank cleaning process. In various examples, the tank cleaning process includes one or more of: (1) discharging the tank or tanks to be cleaned to the rinsate tank 280; (2) pumping cleaning agent from the cleaning agent tank 260 into the tank or tanks for cleaning; (3) pumping the cleaning agent and product remnants from the tank or tanks to the rinsate tank 280; (4) if the water tank 250 is not cleaned with the cleaning agent, then in some examples the water in the water tank 250 may be used to flush fresh water through the tank or tanks that were cleaned; and (5) pumping the cleaning agent from the cleaning agent tank 260 to the rinsate tank 280.

In some examples, the tank cleaning process provides cleaning of any one or more of the primary carrier tank 240, water tank 250, chemical tank 270, or cleaning agent tank 260, in any combination. Some examples of the tank cleaning process use a cleaning agent such as water, air, or detergent. In some examples, the tank to be cleaned is substantially emptied before beginning the cleaning. For example, when the primary carrier tank 240 is being cleaned, in some examples this discharging of the primary carrier tank 240 occurs after the agricultural product has been transferred through the sprayer port 325 to the supply tank 116 on the agricultural sprayer 100. In other examples of the tank cleaning process, any one of the primary carrier tank 240, water tank 250, chemical tank 270, or cleaning agent tank 260 are emptied into the rinsate tank 280 prior to cleaning.

FIG. 8 is a schematic view illustrating example discharge configurations that may be performed prior to a tank cleaning process. In these example discharge configurations, examples of the recirculation operation, shown in FIG. 4, and examples of the additive recirculation process, the additive injection process, and the post-injection recirculation process, shown in FIGS. 5, 6, and 7 respectively, have all ceased.

Referring to FIG. 8, in some examples, in order to discharge the primary carrier tank 240, in some examples the carrier pump 316 directs any agricultural product remaining in the primary carrier tank 240 from the primary carrier tank 240 through the valve 378 and the source selector value 377. In other examples, the discharge operations use other mechanisms to move the agricultural product, such as gravity. The agricultural product continues through the valve 324, the selector valve 374, and the drain valve 370 into the rinsate tank 280. The primary carrier tank 240 then is ready for cleaning.

In some examples, any water remaining in the water tank 250 is emptied into the rinsate tank 280. The water pump 344 directs any remaining water in the water tank 250 through the source selector valve 377, the valve 324, the selector valve 374, and the drain valve 370 into the rinsate tank 280. Once the remaining water in the water tank 250 has been emptied from the water tank 250, the water tank 250 then is ready for cleaning.

In some examples, any chemical remaining the in the chemical tank 270 is substantially emptied into the rinsate tank 280. The chemical pump 354 directs the remaining chemical from the chemical tank 270 through the source selector valve 377, the valve 324, the selector valve 374, and the selector valve 374 into the rinsate tank 280. When the chemical is substantially emptied from the chemical tank 270, the chemical tank 270 then is ready for cleaning.

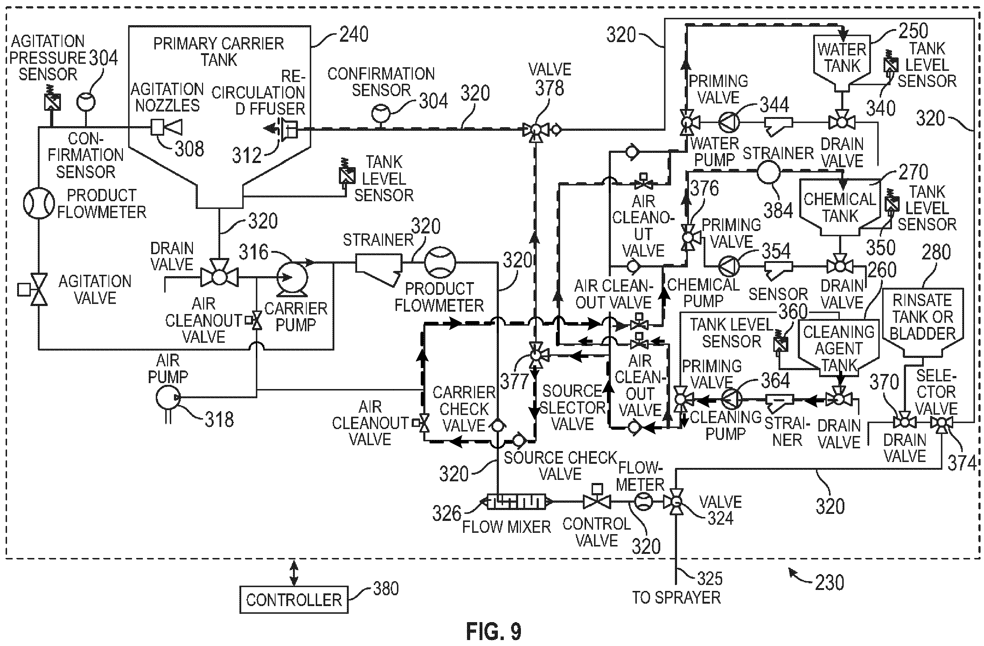

FIG. 9 is a schematic view illustrating example cleaning agent pumping configurations that may be performed during the tank cleaning process. Referring to FIG. 9, in some examples where the primary carrier tank 240 is being cleaned, the cleaning agent pumping configurations direct cleaning agent into the primary carrier tank 240. In these examples, the cleaning pump 364 directs the cleaning agent from the cleaning agent tank 260. The cleaning agent circulates as shown through the drain valve, strainer, and cleaning pump to the source selector valve 377. In the cleaning configuration, the source selector valve 377 is positioned to direct the flow of the cleaning agent up (towards the top of FIG. 9) to the valve 378. The valve 378 is positioned to allow the flow of the cleaning agent into the primary carrier tank 240. In some examples, the agitation nozzles 308 are used along with the cleaning agent in the primary carrier tank 240 to provide cleaning. After cleaning is completed, in some examples, the carrier pump 316 directs the resultant rinsate to the rinsate tank 280, as shown in FIG. 8.

Referring to FIG. 9, in some examples where the water tank 250 is being cleaned, the cleaning agent pumping configurations direct cleaning agent into the water tank 250. In these examples, the cleaning pump 364 directs the cleaning agent from the cleaning agent tank 260. As shown in FIG. 9, the cleaning pump 364 circulates the cleaning agent through the drain valve, strainer, and cleaning pump, to the priming valve. The priming valve is positioned to direct the flow down (towards the bottom of FIG. 9). At the first intersection the flow is direct up (towards the top of FIG. 9) by having the source selector valve 377 closed. The flow continues up, then turns left in FIG. 9 through the air cleanout valve, then up and eventually right through another air cleanout valve, and then up through a priming valve. The cleaning agent then flows into the water tank 250. After cleaning is completed, in some examples, the water pump 344 directs the resultant rinsate to the rinsate tank 280, as shown in FIG. 8.

Referring again to FIG. 9, in some examples where the chemical tank 270 is being cleaned, the cleaning agent cleaning configurations directs cleaning agent into the chemical tank 270. In these examples, the cleaning pump 364 directs the cleaning agent from the cleaning agent tank 260 through the drain valve, strainer, and cleaning pump 364 down (towards the bottom in FIG. 9) and then left through the air cleanout valve. The cleaning agent flows to the source selector valve 377, which is positioned to direct the cleaning agent down (towards the bottom in FIG. 9), then left, then up, and then right through another air cleanout valve. The cleaning agent then circulates as shown to the priming valve 376. The cleaning agent flows through the priming valve 376 and into the chemical tank 270. After cleaning is completed, in some examples, the chemical pump 354 directs the resultant rinsate to the rinsate tank 280, as shown in FIG. 8.

In some examples, where the water in the water tank 250 is clean and the water tank 250 will not be cleaned, the clean water is used to flush the cleaning agent from the tanks being cleaned. As shown in FIG. 9, after one or more of the primary carrier tank 240 and chemical tank 270 are rinsed with the cleaning agent from the cleaning agent tank 260 and the resultant rinsate is directed to the rinsate tank 280, then clean water from the water tank 250 is directed to each of the tanks being cleaned is flushed with clean water to remove any residual cleaning agent. The resultant rinsate is guided to the rinsate tank 280.

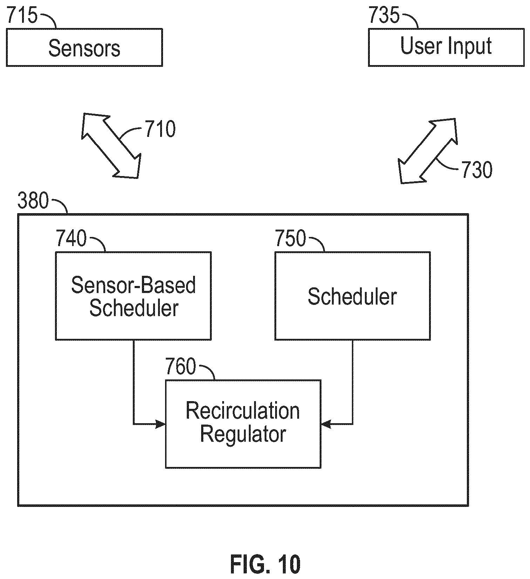

FIG. 10 is a schematic diagram illustrating examples of the components of the controller 380 of the controlled recirculation system 230 shown in FIG. 3. The controller includes a feedback loop and receives input from one or more sources and based on the input, decides whether to institute recirculation. In general, the controlled recirculation system 230 includes one or more of at least two feedback methods: a schedule-based method or a sensor-based method.

For the sensor-based method, the controller 380 is in communication 710 with sensors 715 (such as the sensors 304 shown in FIG. 3). This communication 710 can be wired or wireless transmission and reception. These sensors 715 monitor and analyze the agricultural product stored in the primary carrier tank 240. In general, these sensors 715 detect separation between the agricultural additive and the carrier fluid (such as water), prompting recirculation when predetermined thresholds are reached.

The sensors 715 include any number or types of sensors to permit monitoring of the characteristics, such as homogeneity, of the agricultural product. In addition, the type of sensors are optionally based on the chemical properties of the agricultural product. In some examples, the sensors 715 monitor characteristics indicative of homogeneity of the agricultural product. In other words, has the additives in the agricultural product settled or separate. The monitored characteristics of homogeneity include, but are not limited to, translucency, viscosity, color, particulate count, and the like, of the agricultural product. Any one or more of various types of sensors are used, including infrared, camera, and LED sensors.

For the schedule-based method, in some examples the controller 380 is in communication 730 with user input 735. In these examples, a user provides input about a frequency of the recirculation operation. In some examples, the user provides the input through a user interface. It is also possible that the user provides input manually for the recirculation operation to begin immediately. The communication 730 from the user input 735 can be communicated through a wired or a wireless transmission and reception.

When using the sensor-based method, the controller 380 includes a sensor-based scheduler 740 that receives input from the sensors 715. Based on the input received from the sensors 715, the sensor-based scheduler 740 decides if and when to begin a recirculation operation. In some examples, if one or more of the sensors 715 detects an agricultural product translucency of X and a controller threshold is set at X, then the controlled recirculation system 230 runs. Alternatively, in some examples, the controlled recirculation system 230 stops running when one or more of the sensors 715 measures an agricultural product translucency less than X for a period of, for example, one full cycle of recirculation.

When using the schedule-based method, the controller 380 includes a scheduler 750 that receives input from the user input 735. In general, the scheduler 750 provides one or more of: (1) day and time when the controlled recirculation system 230 runs; and (2) the duration (how long) that the controlled recirculation system 230 runs. In some examples, the scheduler 750 receives from the user input 735 information about the frequency (including day and time) that the controlled recirculation system 230 runs. In other examples, the scheduler 750 contains a database of predetermined intervals that specify a frequency (including day and time) for running of the controlled recirculation system 230. In some examples, the controller 380 uses some combination of both the sensor-based method and the schedule-based method. In some of these examples, one or more of the sensors 715 determine whether the controlled recirculation system 230 runs (e.g., if the translucency meets or exceeds a threshold) and the scheduler determines the duration that the controlled recirculation system 230 runs. In some examples, this duration is determined manually and in other examples the duration is set automatically. In other examples, the controller 380 monitors a characteristic representative of homogeneity during recirculation, such as translucency, viscosity or the like, with the sensors 715, and ceases the recirculation after translucency achieves the specified threshold. Optionally, recirculation is conducted for a full cycle or greater of the agricultural product volume to ensure mixing of the volume after achieving the specified threshold.

A recirculation regulator 760 analyzes data from the sensor-based scheduler 740, the scheduler 750, or both. Based on this data, the recirculation regulator 760 selects one or more of the recirculation operation, chemical injection operation, or cleaning operation to run. Alternatively, the recirculation regulator 760 can take no action if the data does not warrant action (e.g., sensors 715 and controller 380 determine the fluid satisfies a threshold indicative of homogeneity).

### Additional Notes and Aspects

The following, non-limited examples, detail certain aspects of the present subject matter to solve the challenges and provide the benefits discussed herein, among others.

Example 1 is a controlled recirculation system for recirculating an agricultural product in a tender vehicle, comprising: a tender vehicle having a primary carrier tank for delivering the agricultural product to an agricultural sprayer; a carrier pump and recirculation plumbing installed on the tender vehicle, the carrier pump and recirculation plumbing in fluid communication with the primary carrier tank and configured to facilitate recirculation of the agricultural product from the primary carrier tank, through the recirculation plumbing, and subsequently returning the agricultural product to the primary carrier tank; and a controller operatively connected to the primary carrier tank and the carrier pump, the controller configured to determine whether the agricultural product requires recirculation, thereby maintaining the homogeneity of the agricultural product during transport and delivery to the agricultural.

In Example 2, the subject matter of Example 1 includes a notification system for receiving a notification for filling the agricultural sprayer, wherein the notification triggers the premixing of a powdered or liquid agricultural additive with a carrier fluid to create the agricultural product. The controlled recirculation system of Example 1, wherein the agricultural product is stored in the primary carrier tank of the tender vehicle.

In Example 3, the subject matter of Examples 1-2 includes, wherein the controller utilizes a schedule-based method to initiate the recirculation of the agricultural product.

In Example 4, the subject matter of Example 3 includes, wherein the recirculation is initiated based on predetermined intervals.

In Example 5, the subject matter of Examples 3-4 includes a user interface for inputting data and wherein the recirculation is initiated based on a frequency set by an operator through the user interface.

In Example 6, the subject matter of Example 5 includes, wherein the user interface allows the operator to input and receive information about the agricultural product and to set automatic recirculation schedules.

In Example 7, the subject matter of Examples 1-6 includes a sensor for determining a homogeneity of the agricultural product in the primary carrier tank, and wherein the controller utilizes the sensor to trigger the recirculation when predetermined thresholds are detected.

In Example 8, the subject matter of Example 7 includes, wherein the sensor monitors both the viscosity and homogeneity of the agricultural product in the primary carrier tank.

In Example 9, the subject matter of Examples 7-8 includes, wherein the sensor is an infrared sensor.

In Example 10, the subject matter of Examples 7-9 includes, wherein the sensor is a LED sensor.

In Example 11, the subject matter of Examples 7-10 includes, wherein the sensor is a camera.

In Example 12, the subject matter of Examples 7-11 includes, wherein the sensor is positioned at or near the bottom of the primary carrier tank for use when an agricultural product is denser than water.

In Example 13, the subject matter of Example 12 includes, wherein the sensor is a floating sensor that floats on the agricultural product.

In Example 14, the subject matter of Examples 7-13 includes, wherein the sensor is positioned at or near the bottom of the primary carrier tank when an agricultural product is less dense than water.

Example 15 is a method of maintaining homogeneity and preventing settling of an agricultural product, comprising: storing the agricultural product on a tender vehicle in a primary carrier tank, the agricultural product being a combination of an agricultural additive and a carrier fluid; sensing the homogeneity of the agricultural product using a sensor; determining whether the homogeneity is greater than or equal to or less than a predetermined homogeneity threshold; if the homogeneity is less than or equal to the predetermined homogeneity threshold, then taking no action; if the homogeneity is greater than the predetermined homogeneity threshold, then recirculating the agricultural product from the primary carrier tank, through recirculation plumbing, and subsequently returning the agricultural product to the primary carrier tank to uphold the homogeneity of the agricultural product during transport and delivery.

In Example 16, the subject matter of Example 15 includes, wherein the sensor is at least one of: (a) an infrared sensor; (b) a LED sensor; and (c) a camera.

In Example 17, the subject matter of Examples 15-16 includes, wherein the sensor is a floating sensor that floats on the surface of the agricultural product.

In Example 18, the subject matter of Examples 15-17 includes, wherein the sensor is positioned at or near a bottom of the primary carrier tank.

In Example 19, the subject matter of Examples 15-18 includes, wherein the sensor is positioned at or near a top of the primary carrier tank.

In Example 20, the subject matter of Examples 15-19 includes, automatically initiating a recirculation of the agricultural product automatically based on a predetermined schedule inputted through a user interface.

In Example 21, the subject matter of Examples 15-20 includes, wherein the predetermined homogeneity threshold is dynamically adjustable based on factors including chemical properties of the agricultural product, environmental conditions, or operator preferences.

In Example 22, the subject matter of Examples 15-21 includes, recirculating the agricultural product, if the homogeneity is greater than the predetermined homogeneity threshold, during the navigation of the tender vehicle to ensure continuous maintenance of homogeneity prior to the delivery.

**In** Example 23, the subject matter of Examples 15-22 includes, wherein the delivery is to an agricultural sprayer that is conducting spraying operations in a field.

Example 24 is at least one machine-readable medium including instructions that, when executed by processing circuitry, cause the processing circuitry to perform operations to implement of any of Examples 1-23.

Example 25 is an apparatus comprising means to implement of any of Examples 1-23.

Example 26 is a system to implement of any of Examples 1-23.

Example 27 is a method to implement of any of Examples 1-23.

Each of these non-limiting aspects can stand on its own or can be combined in various permutations or combinations with one or more of the other aspects.

The above description includes references to the accompanying drawings, which form a part of the detailed description. The drawings show, by way of illustration, specific embodiments in which the invention can be practiced. These embodiments are also referred to herein as "aspects" or "examples." Such aspects or example can include elements in addition to those shown or described. However, the present inventors also contemplate aspects or examples in which only those elements shown or described are provided. Moreover, the present inventors also contemplate aspects or examples using any combination or permutation of those elements shown or described (or one or more features thereof), either with respect to a particular aspects or examples (or one or more features thereof), or with respect to other Aspects (or one or more features thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method aspects or examples described herein can be machine or computer-implemented at least in part, for instance with one or more processors, associated memory, input and output devices. Some aspects or examples can include a computer-readable medium or machine-readable medium encoded with instructions operable to configure an electronic device to perform methods as described in the above aspects or examples. An implementation of such methods can include code, circuits, code modules, software modules, hardware modules or the like, such as or having microcode, assembly language code, a higher-level language code, hardwiring or the like. Such code can include computer readable instructions for performing various methods. The code may form portions of computer program products or is included in controllers, programmable logic controllers or the like having modules (e.g., circuits, software, subunits or the like) configured to implement the code and perform the various methods. Further, in an aspect or example, the code can be tangibly stored on one or more volatile, non-transitory, or non-volatile tangible computer-readable media, such as during execution or at other times. Aspects or examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), circuits and the like.

The above description is intended to be illustrative, and not restrictive. For example, the above-described aspects or examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as aspects, examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A controlled recirculation system for recirculating an agricultural product in a tender vehicle, comprising:
a tender vehicle having a primary carrier tank for delivering the agricultural product to an agricultural sprayer;
a carrier pump and recirculation plumbing installed on the tender vehicle, the carrier pump and recirculation plumbing in fluid communication with the primary carrier tank and configured to facilitate recirculation of the agricultural product from the primary carrier tank, through the recirculation plumbing, and subsequently returning the agricultural product to the primary carrier tank; and
a controller operatively connected to the primary carrier tank and the carrier pump, the controller configured to determine whether the agricultural product requires recirculation, thereby maintaining the homogeneity of the agricultural product during transport and delivery to the agricultural.

2. The controlled recirculation system according to claim 1, wherein the agricultural product is stored in the primary carrier tank of the tender vehicle.

3. The controlled recirculation system according to claim 1 or 2, wherein the controller utilizes a schedule-based method to initiate the recirculation of the agricultural product, and wherein the recirculation is initiated based on predetermined intervals.

4. The controlled recirculation system according to claim 3, further comprising a user interface for inputting data, wherein the user interface allows the operator to input and receive information about the agricultural product and to set automatic recirculation schedules, and wherein the recirculation is initiated based on a frequency set by an operator through the user interface.

5. The controlled recirculation system according to any one of claims 1 to 4, further comprising a sensor for determining a homogeneity of the agricultural product in the primary carrier tank, and wherein the controller utilizes the sensor to trigger the recirculation when predetermined thresholds are detected.

6. The controlled recirculation system according to claim 5, wherein the sensor monitors both the viscosity and homogeneity of the agricultural product in the primary carrier tank.

7. The controlled recirculation system according to claim 5 or 6, wherein the sensor is at least one of:
(a) an infrared sensor;
(b) a light-emitting diode (LED) sensor;
(c) a camera; and
(d) a floating sensor.

8. The controlled recirculation system according to claim 7, wherein the sensor is positioned at or near the bottom of the primary carrier tank for use when an agricultural product is denser than water.

9. The controlled recirculation system according to claim 7, wherein the sensor is positioned at or near the top of the primary carrier tank when an agricultural product is less dense than water.

10. The controlled recirculation system according to claim 9, wherein the sensor is a floating sensor that floats on the agricultural product.

11. A method of maintaining homogeneity and preventing settling of an agricultural product, comprising:
storing the agricultural product on a tender vehicle in a primary carrier tank, the agricultural product being a combination of an agricultural additive and a carrier fluid;
sensing the homogeneity of the agricultural product using a sensor;
determining whether the homogeneity is greater than or equal to or less than a predetermined homogeneity threshold;
if the homogeneity is less than or equal to the predetermined homogeneity threshold, then taking no action;
if the homogeneity is greater than the predetermined homogeneity threshold, then recirculating the agricultural product from the primary carrier tank, through recirculation plumbing, and subsequently returning the agricultural product to the primary carrier tank to uphold the homogeneity of the agricultural product during transport and delivery.

12. The method according to claim 11, wherein the sensor is at least one of:
(a) an infrared sensor;
(b) a light-emitting diode (LED) sensor;
(c) a camera; and
(d) a floating sensor;
and wherein the sensor is positioned at or near at least one of:
(a) a bottom of the primary carrier tank; and
(b) a top of the primary carrier tank.

13. The method according to claim 11 or 12, wherein the predetermined homogeneity threshold is dynamically adjustable based on factors including chemical properties of the agricultural product, environmental conditions, or operator preferences.

14. The method according to any one of claims 11 to 13, further comprising recirculating the agricultural product, if the homogeneity is greater than the predetermined homogeneity threshold, during the navigation of the tender vehicle to ensure continuous maintenance of homogeneity prior to the delivery.

15. The method according to any one of claims 11 to 14, wherein the delivery is to an agricultural sprayer that is conducting spraying operations in an agricultural field.
